Europäisches Patentamt

(19) European Patent Office

Office européen des brevets

(11) Numéro de publication: **0 125 173**
**B1**

(12) **FASCICULE DE BREVET EUROPEEN**

(45) Date de publication du fascicule du brevet:
08.10.86

(21) Numéro de dépôt: **84400873.0**

(22) Date de dépôt: **02.05.84**

(51) Int. Cl.⁴: **C 22 B 9/02**, C 22 B 9/05,
B 22 F 9/12

(54) **Procédé de production de particules solides métalliques à partir d'un bain métallique.**

(30) Priorité: **04.05.83 FR 8307415**

(43) Date de publication de la demande:
**14.11.84 Bulletin 84/46**

(45) Mention de la délivrance du brevet:
**08.10.86 Bulletin 86/41**

(84) Etats contractants désignés:
**AT BE CH DE FR GB IT LI LU NL SE**

(56) Documents cités:
**EP - A - 0 009 433**
**EP - A - 0 062 548**
**DE - A - 2 542 870**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Foulard, Jean, 15, rue la Sablière, F-94480 Ablon (FR)**
Inventeur: **Rimbert, Jean-Francis, 23, avenue de la République, F-91430 Igny (FR)**
Inventeur: **Vernet, Gilles, 48, rue du Montparnasse, F-75014 Paris (FR)**
Inventeur: **Goursat, Albert Gilbert, 17, rue Cézanne, F-78190 Voisins-le-Bretonneux (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé d'affinage sélectif de métaux ou alliages en fusion.

On rencontre, en métallurgie, un grand nombre de problèmes liés à certains éléments résiduels qui, s'ils ne sont pas éliminés, affectent considérablement les propriétés finales des métaux ou alliages obtenus. On a donc cherché à éliminer les impuretés résiduelles d'un bain métallique et on a été amené de ce fait à mettre en œuvre un certain nombre de procédés. Parmi ceux-ci, on peut citer, par exemple, les procédés chimiques basés sur la différence d'affinité des constituants du bain pour un composé chimique donné, ces procédés mettant en œuvre des réactions chimiques obtenues grâce à des gaz tels que l'oxygène, le chlore, le fluor ou des solides comme la chaux, les procédés électrochimiques, la filtration, la distillation sous vide lorsque les réactifs usuels ne conviennent pas, l'affinage par barbotage de gaz inerte ou encore une combinaison de ces deux dernières techniques.

Parmi tous les procédés d'affinage connus précités, l'affinage par distillation sous vide et l'affinage par barbotage de gaz inerte utilisent tous les deux la différence de pressions partielles des impuretés du métal à affiner dans l'atmosphère en équilibre avec le bain. Le renouvellement de cette atmosphère par le vide ou par insufflation de gaz inerte propre permet, pour un constituant volatile, le déplacement de l'équilibre entre l'impureté en solution dans le métal et l'impureté à l'état gazeux, dans le sens de la vaporisation, si bien que la teneur de l'impureté dans le bain diminue. Ce principe d'affinage par «pompage» des impuretés volatiles dans la phase vapeur est largement utilisé à l'échelle industrielle. Toutefois, ces deux procédés présentent un certain nombre d'inconvénients.

Dans le cas de la distillation sous vide, le principal inconvénient de cette technique réside en un coût d'investissement très élevé lié à la taille de l'installation et à la nécessité d'obtenir des vides poussés. Un autre inconvénient que présente cette technique est l'éventualité d'une oxydation superficielle du bain métallique du fait que la pression partielle en oxygène au-dessus du bain est faible mais non nulle. Cette oxydation superficielle diminue la vitesse d'évaporation des impuretés et par suite limite les possibilités de cette technique.

De plus le rendement de l'opération est insuffisant du fait que le gradient thermique entre la source froide (les parois de l'installation) et la source chaude (la surface du bain métallique) est très faible compte tenu des distances les séparant: les échanges thermiques et donc les réactions sont par conséquent peu rapides.

Dans le cas de l'affinage au moyen d'un gaz inerte, du fait que la pression partielle d'un composé résiduel dans une bulle de gaz inerte en équilibre avec le bain reste souvent très faible, il est nécessaire d'injecter des quantités très importantes de gaz pour baisser notablement la teneur de ce composé. Dans certains cas particuliers une solution possible pour contourner cette difficulté consiste à ajouter, dans le gaz inerte, un gaz très réactif vis à vis du composé à éliminer, tels que le chlore ou le fluor, afin de favoriser le déplacement de l'équilibre dans le sens de l'évaporation par un effet chimique. Cette solution est imparfaite car elle pose de gros problèmes de génération et donc de récupération de gaz toxiques.

Dans un autre domaine, à savoir celui de la fabrication de poudres métalliques à partir d'un métal ou alliage en fusion, on connaît également un procédé tel que décrit dans la demande de brevet européen 0 009 433 de la demanderesse, procédé suivant lequel on amène un corps cryogénique à l'état liquide au contact de la surface du bain métallique à traiter de manière à former, par évaporation-condensation, des particules solides qui sont ensuite séparés du fluide cryogénique et collectées pour obtenir la poudre désirée.

La présente invention vise à tirer parti de cette technique de fabrication de poudres métalliques pour améliorer les conditions d'affinage d'un bain de métal ou d'alliage en fusion.

A cet effet ce procédé d'affinage sélectif de métaux ou alliages en fusion contenus dans une enceinte de traitement fermée est caractérisé en ce qu'on amène au contact de la surface du bain métallique un corps cryogénique solide ou liquide de façon à transformer, par évaporation-condensation, les vapeurs de la ou des impuretés devant être éliminées du bain, en particules solides entraînées par les vapeurs du corps cryogénique et on soumet simultanément le bain métallique à un brassage.

Le brassage du bain métallique qui augmente la surface de contact entre le bain métallique liquide et le corps cryogénique, et qui de ce fait accroît notablement la productivité du procédé, peut être réalisé par tout moyen connu approprié, notamment par voie pneumatique, mécanique, électromagnétique etc., et ce brassage assure en même temps l'homogénéisation du bain pendant le traitement. De préférence on effectue un brassage pneumatique par insufflation, dans le bain métallique, d'un gaz de préférence inerte vis à vis de ce bain, ce gaz éclatant en fines bulles dans le bain.

Le corps cryogénique déversé sur la surface du bain métallique peut être constitué par un gaz liquéfié de préférence inerte vis à vis du bain métallique, tel que l'azote, l'argon, l'hélium. Le liquide cryogénique ainsi déversé forme une nappe liquide qui recouvre la surface du bain métalliques mais qui, en raison du phénomène de caléfaction, est isolée de cette dernière par une couche intermédiaire gazeuse. Dans cette couche intermédiaire le liquide cryogénique, au voisinage de la surface du bain, commence à s'échauffer et les vapeurs froides ainsi formées refroidissent fortement les vapeurs des impuretés provenant du bain métallique et les condensent très rapidement sous forme de particules solides qui sont alors entraînées vers le haut par le reste des vapeurs du liquide cryogénique. Ce passage direct des vapeurs d'impuretés métalliques à l'état solide provoque un déplacement de l'équilibre impuretés à l'état liquide-impuretés à l'état vapeur qui entraîne l'aspiration d'autres vapeurs d'impuretés provenant du bain métallique lesquelles sont condensées immédiatement sous forme de particules solides et entraînées vers le haut et ainsi de suite. On assiste donc à un phénomène de «pompage» grâce à l'utilisation, suivant l'invention, d'un liquide cryogénique qui augmente considérablement la productivité du procédé.

De plus, le fait que, suivant l'invention, on soumet le bain métallique à un brassage, permet d'augmenter de façon notable l'effet de pompage décrit ci-dessus. En effet, en l'absence de brassage, le bain métallique va s'apauvrir en impuretés volatiles à proximité de la surface de contact entre le bain métallique et le liquide cryogénique, ce qui va créer un gradient de concentration des impuretés volatiles au sein même du bain métallique. De plus un écart de température peut apparaître entre la surface de contact entre le bain et le liquide cryogénique d'une part et le reste du bain d'autre part. L'existence de ces deux gradients (concentration et thermique) a un effet néfaste sur la vitesse d'évaporation des impuretés volatiles à éliminer, et donc prolonge considérablement le temps de traitement. Aussi un brassage du bain métallique permet de pallier ces inconvénients en homogénéisant ledit bain et de ce fait en renouvelant la surface de contact entre le liquide cryogénique et le bain métallique. En outre le brassage qui a pour effet d'accroître la surface de contact, donc les échanges thermiques à cet endroit là, permet d'augmenter la rapidité de la transformation des vapeurs d'impuretés métalliques en particules solides et leur évacuation par le haut.

Lorsque le corps cryogénique utilisé dans le procédé suivant l'invention est à l'état liquide, on maintient l'enceinte contenant le bain métallique soit à la pression atmosphérique soit à une pression supérieure à la pression atmosphérique. Le fait de travailler à une pression supérieure à la pression atmosphérique permet d'augmenter la vitesse de formation des vapeurs d'impuretés métalliques et par conséquent de condensation des particules solides, c'est-à-dire de réduire corrélativement la durée nécessaire du traitement d'affinage. En effet une pression de travail plus élevée oblige physiquement la couche de liquide cryogénique à être plus proche de la surface du bain métallique. Ainsi l'épaisseur de la couche gazeuse séparant la surface du bain métallique et la couche de liquide cryogénique étant plus faible, les vapeurs froides du liquide cryogénique refroidissent plus rapidement les vapeurs des impuretés métalliques et en conséquence le phénomène de «pompage» décrit précédemment est plus rapide.

Suivant une variante d'exécution de l'invention le corps cryogénique déposé sur la surface du bain métallique est en phase solide et il est constitué par un gaz solidifié, de préférence inerte vis-à-vis du bain métallique, tel que l'azote, l'argon, l'hélium. On peut aussi envisager d'utiliser, comme corps cryogénique solide, du $CO_2$. Dans ce cas la pression totale à laquelle on maintient l'enceinte contenant le bain métallique est inférieure à la pression atmosphérique, ce qui permet de chauffer le bain métallique à des températures moins élevées. Le solide cryogénique flotte, comme le liquide cryogénique précédemment, à la surface du bain métallique et en raison du phénomène de caléfaction il en est séparé par une couche gazeuse. Le solide cryogénique se sublime progressivement dans l'enceinte sous pression réduite et les vapeurs froides ainsi produites condensent les vapeurs d'impuretés métalliques provenant du bain directement sous la forme de particules solides si bien qu'il se produit ainsi le même phénomène de pompage que décrit précédemment. Le bain métallique est également soumis à un brassage comme dans le cas où l'on utilise un liquide cryogénique.

Le procédé suivant l'invention peut être appliqué, en métallurgie, à l'affinage de divers métaux et alliages, par exemple à l'élimination du cuivre, de l'étain, du plomb, du zinc, du bismuth, du tellure etc, à partir de l'acier, à l'élimination de l'aluminium et du calcium à partir du silicium, à l'élimination du zinc, du lithium, du sodium et du magnésium à partir de l'aluminium.

La température à laquelle est porté le bain métallique joue également un rôle dans la mise en œuvre du procédé suivant l'invention. On porte en effet le bain métallique à une température qui dépend de la pression partielle de l'impureté la plus volatile que l'on désire éliminer.

On décrira ci-après, à titre d'exemple non limitatif, une forme d'exécution de la présente invention, en référence au dessin annexé sur lequel:

la figure 1 est une vue en coupe verticale d'un four dans lequel est mis en œuvre le procédé suivant l'invention.

La figure 2 est une vue schématique, à plus grande échelle, de la partie supérieure du bain sur laquelle et déversé le corps cryogénique, pendant l'opération d'affinage.

La figure 3 est un diagramme illustrant la variation de la teneur en zinc d'un bain métallique d'aluminium et de zinc en fonction du temps, dans le cas de deux essais différents.

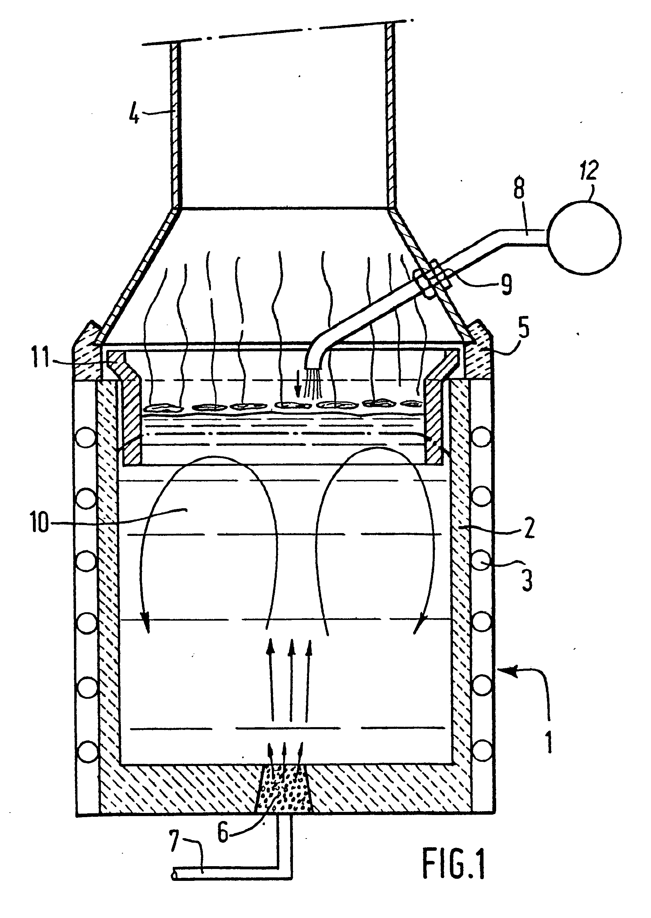

Une installation de mise en œuvre du procédé suivant l'invention qui est représentée schématiquement et en partie sur la figure 1, comprend un four à induction 1 muni d'un garnissage réfractaire 2 et d'une bobine d'induction 3. Ce four 1 est surmonté d'une hotte 4 et l'étanchéité entre le four 1 et la hotte 4 est assurée grâce à un joint d'étanchéité 5. Un élément réfractaire poreux 6 est incorporé dans le fond du garnissage réfractaire interne 2 du four 1 et il est relié, par une canalisation 7, à une source de gaz inerte sous pression (non représentée sur la figure 1). Un bec verseur 8 traverse la paroi de la hotte 4 par un orifice 9 et il est relié, à un récipient 12 de stockage d'un liquide cryogénique constitué d'un gaz neutre liquéfié.

On décrira, à titre d'exemple, la mise en œuvre du procédé suivant l'invention pour l'affinage d'un alliage d'aluminium et de zinc, par élimination de l'impureté que constitue le zinc.

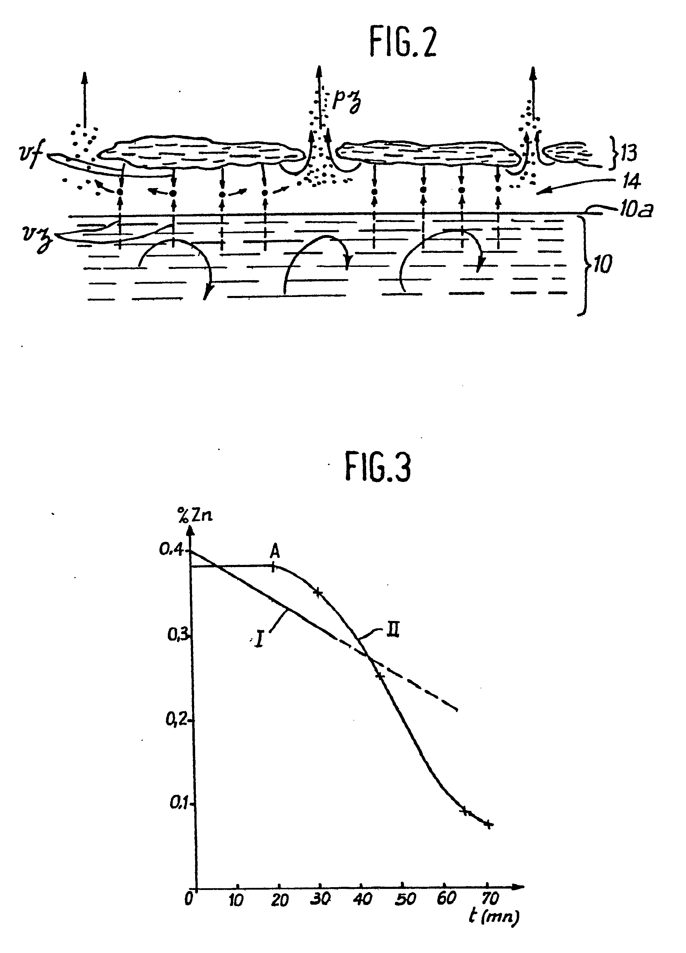

On place cet alliage d'aluminium et de zinc dans le four 1 et on le porte à une température supérieure à 1000°C si bien qu'il se forme un bain de métal liquide 10. On déverse ensuite, par le bec verseur 8, le gaz inerte liquéfié sur la surface 10a du bain 10 de manière à réaliser ainsi une nappe liquide constituée en réalité d'un ensemble de «flaques» 13 (figure 2) qui recouvrent la surface du bain métallique mais qui, en raison du phénomène de caléfaction, sont isolées de cette surface par une couche intermédiaire gazeuse 14. On injecte également, à travers l'élément réfractaire poreux 6 prévu dans le fond, un courant de gaz inerte avec un débit de 1 à 3 m³/heure de façon à assurer le brassage du bain 10. L'impureté que constitue le zinc se vaporise en donnant lieu à des vapeurs de zinc indiquées par les flèches (en tiret), vz sur la figure 2. Au contact des vapeurs froides résultant du réchauffement du liquide cryogénique, vapeurs représentées par les flèches en trait plein vf, le zinc se condense sous forme de particules solides pz qui sont entraînées vers le haut, à travers la hotte 4, par le reste des vapeurs vf du liquide cryogénique, vers une installation de dépoussiérage et de récupération adaptée.

On donnera, dans le tableau ci-dessous, les résultats obtenus pour trois essais différents effectués à partir du même alliage aluminium-zinc mais avec des charges en cet alliage différentes et chauffées à des températures différentes.

| | CHARGE METAL-LIQUE kg | TEMPE-RATURE DU BAIN °C | TENEUR INITIALE EN Zn % | TENEUR FINALE EN Zn % |
|---|---|---|---|---|
| ESSAI 1 | 85 | 840 | 3,2 | 2,8 |
| ESSAI 2 | 90 | 900 | 0,40 | 0,30 |
| ESSAI 3 | 100 | 1.200 | 0,38 | 0,07 |

Sur la figure 3 sont représentées la droite I et la courbe II donnant l'évolution de la teneur en zinc (en % en poids) en fonction du temps de traitement (en minutes), respectivement lors de l'essai n° 2 et de l'essai n° 3. Lors de l'essai n° 2 on déverse le gaz inerte liquéfié dès le début du traitement d'affinage alors que de l'essai n° 3 on ne commence le traitement proprement dit (déversement du gaz inerte liquéfié sur la surface du bain et brassage de ce bain) qu'après avoir chauffé l'alliage pendant un certain temps (voir le point A de la courbe II). On voit, d'après la figure 3, que l'élimination de l'impureté que constitue le zinc s'effectue très rapidment dans tous les cas.

Dans le cas où on utilise un four à moyenne fréquence, la surface du bain métallique 10 a la forme d'un ménisque. Pour que la couche de gaz interne liquéfié 13 ne recouvre que la partie plane de cette surface, on place une virole réfractaire 11 à la partie supérieure du four 1.

## Revendications

1. Procédé d'affinage sélectif de métaux ou alliages en fusion contenus dans une enceinte de traitement fermée caractérisé en ce qu'on amène au contact de la surface du bain métallique un corps cryogénique solide ou liquide de façon à transformer, par évaporation-condensation, les vapeurs de la ou des impuretés devant être éliminées du bain, en particules solides entraînées par les vapeurs du corps cryogénique et on soumet simultanément le bain métallique à un brassage.

2. Procédé suivant la revendication 1, caractérisé en ce qu'on déverse sur la surface du bain métallique un liquide cryogénique et on maintient l'enceinte à une pression égale ou supérieure à la pression atmosphérique.

3. Procédé suivant la revendication 1, caractérisé en ce qu'on dépose sur la surface du bain métallique un solide cryogénique et on maintient l'enceinte à une pression inférieure à la pression atmosphérique.

4. Procédé suivant l'une quelconque des revendications précédentes, caractérisé en ce que le corps cryogénique est constitué par un corps chimiquement inerte vis à vis du bain métallique, tel que l'azote, l'argon, l'hélium, ou encore du gaz carbonique, à l'état liquide ou solide.

5. Procédé suivant l'une quelconque des revendications précédentes, caractérisé en ce qu'on effectue le brassage du bain métallique par insufflation d'un gaz dans le bain par l'intermédiaire d'un élément réfractaire poreux incorporé dans le fond de l'enceinte contenant le bain.

6. Procédé suivant la revendication 5, caractérisé en ce que le gaz de brassage insufflé est un gaz chimiquement inerte, vis à vis du bain métallique, tel que l'azote, l'argon, l'hélium.

7. Procédé suivant l'une quelconque des revendications précédentes, caractérisé en ce que le bain métallique est constitué d'un métal.

8. Procédé suivant l'une quelconque des revendications 1 à 6, caractérisé en ce que le bain métallique est constitué d'un alliage de deux ou plusieurs métaux.

9. Procédé suivant l'une des revendications 1 à 8, caractérisé en ce que le bain métallique a une température qui dépend de la pression partielle de l'impureté la plus volatile que l'on désire éliminer.

## Patentansprüche

1. Verfahren zum selektiven Affinieren von Metallen oder Legierungen in Schmelze, die in einem geschlossenen Behandlungsraum enthalten sind, dadurch gekennzeichnet, dass man einen festen oder flüssigen Tiefsttemperaturkörper mit der Oberfläche des Metallbades derart in Berührung bringt, dass man durch Verdampfung-Kondensation die Dämpfe der Verunreinigung oder der Verunreingungen, bevor sie aus dem Bad beseitigt sind, in feste Teilchen umwandelt, welche durch die Dämpfe des Tiefsttemperaturkörpers mitgerissen werden, und man gleichzeitig das Metallbad umrührt.

2. Verfahren nach Anspruch 1, dadurch gekennzeichnet, dass man auf der Oberfläche des Metallbades eine Tiefsttemperaturflüssigkeit ausgiesst und den Raum auf einem Druck hält, der gleich oder grösser als der Atmosphärendruck ist.

3. Verfahren nach Anspruch 1, dadurch gekennzeichnet, dass man auf der Oberfläche des Metallbades einen Tiefsttemperaturfestkörper anordnet und den Raum auf einem Druck unter dem atmosphärischen Druck hält.

4. Verfahren nach einem der vorhergehenden Ansprüche, dadurch gekennzeichnet, dass der Tiefsttemperaturkörper aus einem chemisch gegenüber dem Metallbad inerten Körper besteht, wie z.B.

Stickstoff, Argon, Helium, oder auch Kohlensäuregase, in flüssigem oder festem Zustand.

5. Verfahren nach einem der vorhergehenden Ansprüche, dadurch gekennzeichnet, dass man das Metallbad durch Einblasen eines Gases in das Bad mittels eines porösen, feuerbeständigen Elementes umrührt, welches am Boden des das Bad enthaltenden Raumes untergebracht ist.

6. Verfahren nach Anspruch 5, dadurch gekennzeichnet, dass das eingeblasene Umrührgas ein gegenüber dem Metallbad chemisch inertes Gas ist, wie z.B. Stickstoff, Argon, Helium.

7. Verfahren nach einem der vorhergehenden Ansprüche, dadurch gekennzeichnet, dass das Metallbad aus einem Metall besteht.

8. Verfahren nach einem der Ansprüche 1 bis 6, dadurch gekennzeichnet, dass das Metallbad aus einer Legierung von zwei oder mehreren Metallen besteht.

9. Verfahren nach einem der Ansprüche 1 bis 8, dadurch gekennzeichnet, dass das Metallbad eine Temperatur hat, die von dem Partialdruck der am meisten flüchtigen Verunreinigung, die man beseitigen möchte, abhängt.

**Claims**

1. Process to selectively affine metals or alloys in fusion contained in a closed treatment enclosure characterized in that one brings in contact a solid or liquid cryogenic body with the surface of the metallic bath such as to transform by evaporation-condensation the vapors of the impurity or the impurities before being eliminated from the bath, in solid particulates entrained by the vapors of the cryogenic body, and one submits the metallic bath to a stirring simultaneously.

2. Process according to claim 1, characterized by that one pours out a cryogenic liquid on the surface of the metallic bath and one maintains the enclosure at a pressure equal or higher than the atmospheric pressure.

3. Process according to claim 1, characterized by that one deposites a cryogenic solid on the surface of the metallic bath and one maintains the enclosure at a pressure below the atmospheric pressure.

4. Process according to any of the preceding claims, characterized by that the cryogenic body is constituted by a body chemically inert compared with the metallic bath, such as nitrogen, argon, helium and also carbon dioxide in liquid or solid condition.

5. Process according to any of the preceding claims, characterized by that one stirs the metallic bath by blowing a gas into the bath by means of a porous refractory element incorporated in the fond of the enclosure comprising the bath.

6. Process according to claim 5, characterized by that the insufflated stirring gas is a gas being chemically inert compared with the metallic bath, such as nitrogen, argon, helium.

7. Process according to any of the preceding claims, characterized by that the metallic bath is constituted by a metal.

8. Process according to any of the claims 1 to 6, characterized by that the metallic bath is constituted by an alloy of two or more metals.

9. Process according to one of the claims 1 to 8, characterized by that the metallic bath has a temperature depending on the partial pressure of the most volatile impurity which is to be eliminated.

FIG.1

# FIG.2

# FIG.3